# FASCICULE DE BREVET EUROPEEN

(11) **EP 2 795 878 B1**
(45) Date de publication et mention de la délivrance du brevet: **15.07.2020**
(21) Numéro de dépôt: 12812299.1
(22) Date de dépôt: 17.12.2012
(51) Int. Cl.: H04L 29/06, H04L 29/08

(54) **PROCÉDÉ DE PARTAGE D'UN CONTENU MULTIMÉDIA ENTRE UTILISATEURS**
VERFAHREN ZUR MULTIMEDIAINHALTTEILUNG ZWISCHEN BENUTZERN
METHOD FOR SHARING MULTIMEDIA CONTENTS BETWEEN USERS.

(30) Priorité: 23.12.2011 FR 1162429
(43) Date de publication de la demande: 29.10.2014
(73) Titulaire: ORANGE, 75015 Paris (FR)
(72) Inventeur: LE HUEROU, Emmanuel, F-22700 Saint Quay Perros (FR); GODEST, Jean-Pierre, F-22300 Lannion (FR)
(74) Mandataire: Cabinet Beau de Loménie
(86) Numéro de dépôt international: PCT/FR2012/052952
(87) Numéro de publication internationale: WO 2013/093313

(56) Documents cités:
- WO-A1-2010/136323
- WO-A2-2011/132956
- US-A1- 2007 271 338
- US-A1- 2007 296 805
- US-A1- 2009 100 134
- US-A1- 2011 173 547

## Description

L'invention concerne de manière générale le domaine des télécommunications et plus précisément le partage de données stockées dans un réseau de télécommunications entre deux terminaux d'utilisateurs connectés au réseau.

La présente invention s'applique notamment à un système de télécommunication relevant du concept connu sous l'expression « d'informatique en nuage » (de l'expression anglaise « *cloud computing* »), c'est-à-dire un système informatique qui permet aux particuliers de stocker leurs données personnelles sur des serveurs, mais également aux entreprises qui ne disposent pas de leurs propres serveurs, de stocker leurs données sur des serveurs qu'elles louent ; ces dernières délèguent ainsi leurs opérations de calcul et de stockage à des prestataires bénéficiant d'infrastructures informatiques disséminées dans le monde entier et reliées entre elles par un réseau. L'accès à cette « informatique en nuage » se fait généralement *via* Internet, et dans ce contexte un utilisateur particulier ou d'entreprise accède à ses applications et ses données hébergées sur un ou plusieurs serveurs distants au travers d'un « bureau virtuel », *via* tout terminal informatique connecté au réseau.

Ainsi, de manière classique, l'utilisateur d'un service de stockage de données sur Internet se connecte à une plateforme de services dans laquelle est hébergée une base de données numériques contenant ses données personnelles, typiquement des documents ou contenus multimédias tels que des photos, des vidéos, des documents audio, etc., via un navigateur web de son terminal informatique. Plus précisément, pour se connecter à son espace personnel sur le réseau, l'utilisateur entre un identifiant d'utilisateur (*login*) et un mot de passe (*password*) à partir de son terminal connecté à un réseau de type IP (*Internet Protocol*). Après vérification de son identité par le serveur, l'utilisateur accède à son environnement de données personnelles. L'utilisateur peut ainsi se connecter à son environnement de données personnelles hébergé par la plateforme de services depuis divers terminaux informatiques connectés à l'internet de manière fixe (PC, par exemple) ou en mobilité (téléphone intelligent ou *smartphone,* tablette numérique, ...).

A titre d'exemples, de tels services de stockage de données informatiques en « nuage » sont proposés par des sociétés telles que Dropbox (*Dropbox*™, stockage et partage de fichiers en ligne) ou Google (*Picasa Web Album*™*,* gestion de photos sur le web).

De telles plateformes de services offrent également des fonctionnalités de partage de contenus multimédias qui permettent notamment à un utilisateur de la plateforme de services de faire des présentations de contenus à un autre utilisateur. Classiquement, pour établir une session de présentation ou de partage d'un contenu, l'utilisateur présentateur et l'utilisateur « visiteur » devront tous les deux être inscrits auprès de la plateforme de services, c'est-à-dire disposer chacun d'une identité d'utilisateur qui leur est propre. Par ailleurs, dans la plupart des solutions connues de partage de contenus, une application logicielle spécifique devra être installée dans le terminal informatique de l'utilisateur présentateur, mais également dans celui de l'utilisateur visiteur.

La présente invention vise à améliorer la situation exposée ci-dessus en permettant notamment à un utilisateur d'un service de stockage de données sur un réseau de télécommunications, d'établir de manière sécurisée une session de partage de ses données avec toute personne disposant d'un terminal informatique connectable au réseau, sans nécessité que cette personne soit un utilisateur inscrit au service en question.

Le document US 2011/173547 A1 divulgue un système pour faciliter les communications en temps réel et le partage de contenu entre des utilisateurs dans un réseau.

Le document US 2009/100134 A1 divulgue un système pour réaliser du partage personnalisé de contenu multimédia dans un réseau de communication.

Le document US 2007/296805 A1 divulgue un téléphone établissant une communauté de partage de contenu avec des utilisateurs associés à d'autres téléphones.

Le document US 2007/271338 A1 divulgue un système pour synchroniser une expérience multimédia.

Le document WO 2011/132956 A1 divulgue un système pour partager un ou des contenus multimédias dans une session entre des terminaux.

L'invention est définie dans le jeu de revendications ci-joint.

Selon le procédé revendiqué, l'accès du premier terminal à la plateforme de services pour le partage de documents numériques avec l'utilisateur du second terminal est conditionné par l'authentification réussie d'un identifiant du second terminal par le serveur de partage de contenus. Ainsi, il n'est pas nécessaire que l'utilisateur du premier terminal soit un utilisateur inscrit auprès de la plateforme offrant le service de partage de contenus.

Par ailleurs, l'accès par le premier utilisateur (l'utilisateur du premier terminal) aux données personnelles du second utilisateur est sécurisé puisque la validation par le serveur de partage de la requête de partage envoyée par le premier terminal, prend en compte un identifiant du terminal du second utilisateur dans un message de réponse à la requête, reçu du second terminal. Par exemple, lorsque le second terminal est un terminal de téléphonie mobile (par exemple un *smartphone*), l'identifiant précité du second terminal est un identifiant d'abonné à un réseau de téléphonie mobile, par exemple un numéro de téléphone (numéro MSISDN) stocké dans la carte SIM du téléphone.

En pratique, lorsque le second terminal est un téléphone mobile (par exemple un *smartphone*), l'utilisateur du second terminal propriétaire des données personnelles stockées sur le réseau, peut par conséquent autoriser rapidement et simplement l'accès et le partage de ses données personnelles à un autre terminal avec son téléphone mobile. En effet, le numéro MSISDN (*Mobile Station ISDN Number*) stocké dans la carte SIM (*Subscriber Identity Module*) du téléphone mobile est déductible de la réponse à la requête de partage, puis est authentifié dans le serveur, ce qui permet de garantir de manière fiable l'origine de la réponse à la requête de partage.

Selon une caractéristique, le procédé susmentionné comprend en outre une étape (D) de détermination par le second utilisateur d'au moins un contenu multimédia à partager, transmission du second terminal vers le serveur de partage d'au moins une commande destinée à permettre la visualisation dans le premier terminal, via la fenêtre de partage, du contenu multimédia déterminé.

Grâce à la caractéristique précitée, c'est le second utilisateur qui contrôle le déroulement de la session de partage du contenu sélectionné, en utilisant son (second) terminal comme s'il s'agissait d'une « télécommande » pour contrôler la session et l'affichage du contenu partagé dans le premier terminal.

Selon un mode de réalisation particulier, à l'étape (D) précitée, la commande destinée à permettre la visualisation d'un contenu multimédia déterminé est une commande utilisant un langage de type XML transmise selon un protocole de type HTTP, le traitement de la commande par le serveur de partage de contenus déclenchant la création dans l'espace de partage d'un lien de type URL (*Uniform Resource Locator*) permettant l'accès au contenu multimédia depuis le premier terminal.

En pratique, le premier terminal exécute une opération préalable de téléchargement et d'affichage d'une page web d'accès au serveur de partage de la plateforme de services. Ensuite, pour visualiser un contenu sélectionné par le second utilisateur, le premier utilisateur peut, selon un premier exemple, cliquer avec une souris sur le lien hypertexte (URL) affiché dans la fenêtre de partage produite par le navigateur Internet du premier terminal ; selon un second exemple, le lien hypertexte peut être résolu de manière automatique et le contenu affiché sans intervention de l'utilisateur, par exemple en mode diaporama s'il s'agit de photos.

Selon un premier mode de réalisation, l'étape (A) du procédé ci-dessus inclut :
(a1) - dans le premier terminal de télécommunication, génération d'une requête de partage du contenu, cette requête incluant une information d'identification du second utilisateur, et envoi de la requête de partage au serveur de partage ;
(a2) - dans le serveur de partage, détermination du second terminal de télécommunication à partir de l'information d'identification du second utilisateur extraite de la requête de partage reçue, puis transmission au second terminal d'une demande d'autorisation de partage concernant le premier terminal relativement au contenu multimédia à partager ;
(a3) - dans le second terminal, l'envoi d'une réponse à la requête de partage à destination du serveur de partage de la plateforme.

Dans ce mode de réalisation, l'étape (a3) comprend selon un exemple de réalisation la notification de la demande d'autorisation de partage dans le second terminal ; et suite à une action du second utilisateur effectuée au moyen d'une interface homme-machine du second terminal, l'envoi d'une réponse à la demande d'autorisation de partage à destination du serveur de partage.

Ainsi, dans ce premier mode de réalisation, c'est le serveur de partage qui fait office d'intermédiaire entre l'utilisateur du premier terminal et celui du second terminal, propriétaire des données auxquelles le premier utilisateur veut accéder. Ce mode de réalisation est ainsi particulièrement adapté à la situation dans laquelle les premier et second utilisateurs sont distants l'un de l'autre.

En pratique, le procédé de partage comprend une opération préalable de chargement et d'affichage dans le premier terminal d'une page web d'accès au serveur de partage de la plateforme. Selon un second mode de réalisation, qui peut être avantageusement combiné avec le premier mode de réalisation exposé ci-dessus, la page web d'accès au serveur de partage affichée dans le premier terminal, représente un code à deux dimensions généré automatiquement par le serveur de partage lors du téléchargement de la page web précitée. Dans ce contexte, l'étape (A) du procédé selon l'invention est précédée par les étapes suivantes :
- transmission d'une information représentative d'une requête de partage du premier terminal au second terminal, cette information consistant à transmettre le code à deux dimensions à une application logicielle installée dans le second terminal ;
- dans le second terminal, envoi d'une réponse à la requête de partage à destination du serveur de partage.

Dans ce second mode de réalisation, la transmission de la requête de partage a lieu directement du premier terminal vers le second terminal, par exemple par photographie par le second terminal du code affiché à l'écran du premier terminal. On comprendra alors que ce mode de réalisation est particulièrement adapté à la situation dans laquelle les deux terminaux sont situés à proximité l'un de l'autre, par exemple dans une même pièce. Dans ce contexte, la mise en oeuvre de l'invention peut permettre de réaliser une application de présentation de contenus multimédias - par exemple dans le cadre d'une formation - dirigée par l'utilisateur du second terminal, par exemple un *smartphone,* à l'attention de plusieurs « premiers » utilisateurs disposant de terminaux de type ordinateur personnel (PC).

Selon une caractéristique particulière, le procédé de partage comprend l'affichage dans le second terminal d'une interface utilisateur présentant à l'utilisateur du second terminal, des informations relatives aux demandes de partage et à l'état de sessions de partage actives avec la plateforme de services pour un ensemble de terminaux de télécommunications prédéterminé ; cette interface utilisateur offrant des fonctions de contrôle d'une session de partage en cours, relatives en particulier à la durée de la session ou à l'arrêt de la session.

Ainsi l'utilisateur d'un (second) terminal, « propriétaire » des documents pouvant faire l'objet d'une consultation partagée, pourra avantageusement garder le contrôle des connexions en cours avec le serveur de contenus pour un ensemble prédéfini de terminaux d'utilisateurs. En particulier, l'utilisateur du second terminal aura, via une interface graphique, la possibilité d'interrompre une connexion en cours entre un premier terminal parmi l'ensemble de terminaux prédéfini, et le serveur de contenus.

Il est aussi décrit un terminal de télécommunications comprenant :
- des moyens de réception d'une information représentative d'une requête de partage d'un contenu multimédia, émise par un premier terminal de télécommunication, le contenu multimédia étant stocké dans une base de données hébergée par une plateforme de services sur un réseau de télécommunications ;
- des moyens de génération et d'envoi d'une réponse à la requête de partage de contenu à destination d'un serveur de partage de contenus de la plateforme afin de permettre la validation de la requête de partage par authentification d'un identifiant du terminal de télécommunication.
- des moyens de contrôle d'une session de partage incluant des moyens de détermination d'au moins un contenu multimédia à partager, et de transmission vers le serveur de partage d'au moins une commande destinée à permettre la visualisation dans le premier terminal du contenu multimédia déterminé.

Selon des caractéristiques particulières du terminal de télécommunication, celui-ci comporte :
- des moyens d'interface graphique adaptés à afficher des informations relatives aux requêtes de partage de contenus multimédias et à l'état d'activation de sessions de partage de contenus pour un ensemble de terminaux de télécommunications prédéterminé ;
- des moyens de réception et de lecture d'un code à deux dimensions transmis par le premier terminal, ce code étant représentatif d'une requête de partage de contenu multimédia par le premier terminal, et la réponse à la requête de partage de contenu à destination du serveur de partage de contenus, incluant le code à deux dimensions.

Un tel code transmis initialement par le serveur au premier terminal peut inclure un identifiant du premier terminal et un code secret. L'échange préalable d'un code secret entre le serveur de partage et le premier terminal permet ainsi de sécuriser davantage le procédé de partage selon l'invention. Le code à deux dimensions précité est récupéré par le second terminal conformément au second mode de réalisation exposé plus haut, puis transmis avec la réponse à la requête de partage, du second terminal au serveur de partage. Le serveur de partage peut ensuite effectuer avantageusement, une double vérification, c'est-à-dire vérifier l'identité de l'utilisateur du second terminal, par exemple à partir du numéro de téléphone associé au second terminal, et d'autre part, comparer le code à deux dimensions précité reçu, avec celui initialement émis vers le premier terminal.

Corrélativement, il est décrit un serveur de partage de contenus multimédias pour la mise en oeuvre d'un procédé de partage de contenus, tel que brièvement exposé plus haut, ce serveur comprenant :
- des moyens de réception, en provenance d'un second terminal de télécommunication, d'une réponse à une requête de partage d'un contenu multimédia émise par un premier terminal de télécommunication ;
- des moyens de vérification d'un identifiant du second terminal suite à la réception de la réponse à une requête de partage de contenu ;
- des moyens d'activation d'une session de partage de contenu entre le premier et le second terminal en fonction du résultat de la vérification de l'identifiant du second terminal.

Selon des caractéristiques particulières d'un tel serveur de partage les moyens de réception précités sont adaptés à recevoir une requête de partage de contenu en provenance du premier terminal, cette requête incluant une information d'identification d'un second utilisateur. Par ailleurs, le serveur de partage comporte en outre :
- des moyens de détermination du second terminal de télécommunication à partir de l'information d'identification d'un second utilisateur extraite de la requête de partage de contenu reçue ; et,
- des moyens de transmission au second terminal d'une demande d'autorisation de partage concernant le premier terminal relativement audit contenu multimédia ;
- les moyens d'activation de session de partage incluent des moyens de création d'un espace mémoire de partage destiné à permettre le partage temporaire de données de contenu entre les premier et second terminaux.

Enfin, selon un dernier aspect, l'invention a pour objet un module logiciel selon la revendication 11 destiné à être incorporé dans un terminal de télécommunications selon l'invention, tel que brièvement exposé plus haut, ou bien destiné à être incorporé dans un serveur de partage selon l'invention, tel que brièvement exposé plus haut. Un tel module logiciel comporte des instructions de programme dont l'exécution par un processeur informatique permet de mettre en oeuvre les étapes d'un procédé de partage d'un contenu multimédia, selon l'invention, qui sont exécutées, selon le cas considéré, dans un terminal de télécommunications selon l'invention ou bien dans un serveur de partage selon l'invention.

Par ailleurs, un tel module logiciel peut utiliser n'importe quel langage de programmation, et comprendre des programmes sous forme de code source, code objet, ou de code intermédiaire entre code source et code objet, tel que dans une forme partiellement compilée, ou dans n'importe quelle autre forme souhaitable.

L'invention vise aussi par conséquent un support d'enregistrement d'informations lisible par un ordinateur, et comportant des instructions de programme d'ordinateur. Un tel support d'enregistrement peut être constitué par n'importe quelle entité ou dispositif capable de stocker un tel programme. Par exemple, le support peut comporter un moyen de stockage, tel qu'une ROM, par exemple un CD ROM ou une ROM de circuit microélectronique, ou encore un moyen d'enregistrement amovible tel qu'une clé USB ou un moyen d'enregistrement magnétique, tel qu'un disque dur. D'autre part, un module logiciel selon l'invention peut être en particulier téléchargé sur un réseau de type Internet.

Les avantages procurés par un terminal de télécommunications, un serveur de partage, un module logiciel, tels que brièvement définis plus haut, sont identiques ou contribuent à ceux mentionnés plus haut en relation avec le procédé de partage selon l'invention, et ne seront par conséquent pas rappelés ici.

D'autres caractéristiques et avantages de la présente invention ressortiront de la description détaillée qui suit, laquelle fait référence aux dessins annexés dans lesquels :
- la figure 1 illustre un système de télécommunications dans lequel l'invention est mise en oeuvre, et en particulier illustre les éléments fonctionnels incorporés respectivement dans un terminal de télécommunication et dans un serveur de partage, selon l'invention ; et
- la figure 2 représente sous forme d'organigramme les principales étapes d'un procédé de partage, selon l'invention, d'un contenu multimédia stocké dans une plateforme de services, entre un premier et un second terminal de télécommunications.

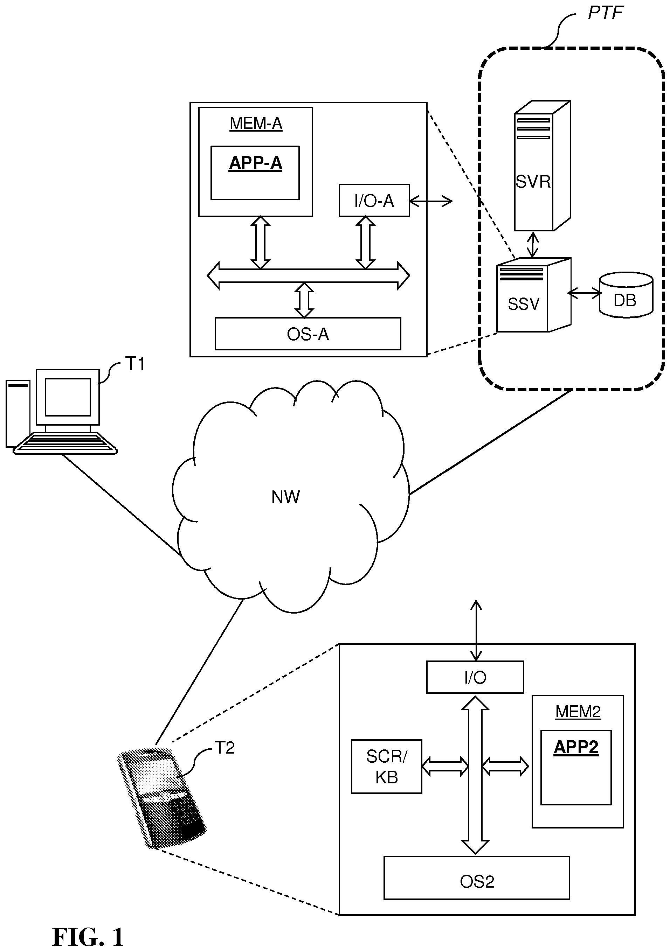

La **figure 1** illustre un système de télécommunications dans lequel l'invention est mise en oeuvre. Comme représenté sur la figure 1, un premier terminal de télécommunication T1 est connecté au réseau de télécommunications NW constitué ici d'un réseau IP de type Internet. Le terminal T1 dans cet exemple de réalisation est ordinateur personnel (PC), mais il peut s'agir d'une tablette numérique, d'un *smartphone* connecté à Internet, ou encore d'un terminal de type télévision (TV) connectée.

Le système comprend aussi une plateforme de services PTF connectée au réseau NW, et qui offre divers services tels que le stockage de données personnelles « dans le nuage » (*cloud storage*) - par exemple des documents multimédias tels que des vidéos, photos, des documents textuels, etc. La plateforme de services PTF comprend un serveur de partage de documents (ou contenus) SSV associé à une base de données DB d'utilisateurs des services de la plateforme, et un serveur SVR de données stockant les données personnelles des utilisateurs inscrits au service de stockage de données personnelles, c'est-à-dire ayant des données personnelles stockées par le serveur SVR de données.

La base de données d'utilisateurs (DB) associée au serveur de partage (SSV), contient pour chaque utilisateur de la plateforme de services, une liste ou un tableau mémorisé contenant un identifiant d'utilisateur ou abonné au service de stockage et partage de données, par exemple un nom d'utilisateur, associé à au moins un identifiant d'abonné à un réseau de téléphonie ou un identifiant de terminal, par exemple un numéro de téléphone mobile, un numéro de téléphone IP fixe, une adresse IP. En outre, un tel tableau d'utilisateur peut avantageusement comprendre un autre identifiant de communication, tel qu'une adresse email. Ainsi, l'utilisateur d'un terminal T1, pourra utiliser une adresse email par exemple, pour permettre au serveur d'identifier un utilisateur inscrit dans la base de données d'utilisateurs (DB) et déterminer ensuite un terminal (T2) associé à l'utilisateur identifié.

Le système représenté comprend également un second terminal de télécommunication, T2, connecté au réseau NW. Dans l'exemple de réalisation décrit et illustré, le terminal T2 est un terminal de téléphonie mobile de type *smartphone.* Le téléphone mobile T2 est représenté sur la figure 1 connecté au réseau NW pour simplifier l'exposé. Cependant, le terminal T2 peut en pratique être relié au réseau NW au travers d'un réseau d'accès, par exemple un réseau WiFi, ou bien au travers d'un réseau mobile de troisième génération (UMTS) (connexion en mode *data*).

Comme représenté à la figure 1, le terminal mobile T2 inclut notamment les modules fonctionnels suivants :
- Un module de communication d'entrée/sortie, noté « I/O » et destiné à communiquer avec le réseau NW.
- Un module système d'exploitation, OS2, par exemple le système d'exploitation Android™ de la société Google, gérant l'interaction entre les différents modules et le processeur (non représenté) du terminal T2.
- Un dispositif d'affichage associé à un clavier (tactile ou mécanique) « SCR/KB ».
- Un module mémoire MEM2 dans lequel est stockée une application ou module logiciel APP2 selon l'invention. On notera ici que l'application APP2 peut être constituée par un navigateur Internet.

Le module I/O permet en particulier de recevoir une information représentative d'une requête de partage par le premier terminal de télécommunication T1, d'un contenu multimédia appartenant aux données personnelles de l'utilisateur du terminal T2 et stockées par le serveur de données SVR de la plateforme de services PTF, puis de communiquer cette information à l'application APP2.

L'application APP2 inclut des instructions de programme adaptées à générer une réponse à la requête de partage précitée, transmise ensuite au module I/O qui à son tour la transmet à destination du serveur de partage SSV, au travers du réseau NW.

L'application APP2 du terminal T2 inclut aussi des instructions dont l'exécution produit une interface homme-machine - en pratique une interface graphique affichée par l'écran SCR du terminal -, via laquelle l'utilisateur du terminal T2 reçoit notification d'une information représentative de la requête de partage de document, et lui permet d'envoyer une réponse à la requête de partage à destination du serveur de partage (SSV).

Dans le mode de réalisation présenté, l'interface graphique produite par l'application APP2 est adaptée à afficher des informations relatives aux requêtes de partage de documents et à l'état de connexion avec la plateforme de services PTF pour un ensemble de terminaux de télécommunications prédéterminé. Cet ensemble de terminaux peut inclure d'autres terminaux de l'utilisateur principal du terminal T2 (un terminal mobile dans le mode de réalisation illustré), comme par exemple une tablette numérique ou un PC de maison, ou bien des terminaux de télécommunications appartenant à des personnes choisies par l'utilisateur du terminal T2 (par exemple des amis ou des personnes de sa famille).

Selon un mode particulier de réalisation, le terminal T2 comprend en outre un module de lecture d'un code à deux dimensions, intégré ou associé à l'application APP2, et permettant notamment de lire un code à deux dimensions affiché par le premier terminal T1, lequel code étant représentatif d'une requête de partage d'un document par le terminal T1.

Dans ce mode de réalisation, une réponse à une requête de partage de document, transmise par le terminal T2 à destination du serveur de partage, inclut un tel code à deux dimensions, que le serveur de partage de contenus compare ensuite avec le code généré initialement. En pratique un tel code à deux dimensions peut être constitué d'un code barre, tel qu'un QR code.

Selon une variante de réalisation, un terminal T2 selon l'invention peut être équipé d'un lecteur d'étiquette (*tag* en anglais) NFC destiné à lire une étiquette NFC (*Near Field Communication*) équipant et programmée par le terminal T1.

Toujours à la figure 1, le serveur de partage de contenus, SSV, comporte corrélativement les modules fonctionnels suivants :
- Un module de communication d'entrée/sortie, noté « I/O-A » et destiné à communiquer avec le réseau NW et recevoir notamment une requête de partage d'un contenu en provenance du premier terminal T1, cette requête de partage de contenu incluant une information d'identification d'un utilisateur inscrit aux services fournis par la plateforme de services PTF. Dans le mode de réalisation décrit, cette information d'identification d'utilisateur est une information d'identification d'un abonné à un second réseau de télécommunications - ici un réseau de téléphonie mobile, l'information d'identification étant par exemple le numéro de téléphone associé à la carte SIM incorporée dans le terminal T2. Le module I/O-A est chargé également de transmettre au second terminal T2, identifié grâce à l'information d'identification précitée, une demande d'autorisation de partage de contenu pour le premier terminal T1.
- Un module système d'exploitation, OS-A, gérant l'interaction entre les différents modules et le processeur (non représenté) du serveur.
- Un module mémoire MEM-A dans lequel est stockée une application ou module logiciel APP-A selon l'invention, dont les instructions de programme lorsqu'elles sont exécutées par un processeur (non représenté) du serveur de partage SSV permettent de mettre en oeuvre les étapes du procédé de partage de contenus selon l'invention qui sont mises en oeuvre dans le serveur de partage de contenus. En particulier, le module logiciel APP-A est conçu pour vérifier un identifiant d'un second terminal T2 - c'est-à-dire, dans le mode de réalisation décrit, un identifiant d'abonné (numéro de téléphone) d'un réseau de téléphonie mobile -, suite à la réception d'une réponse à une requête de partage de contenu, en provenance du terminal T2. D'autre part, le module APP-A est chargé de valider ou non la requête de partage de contenu émise par le premier terminal T1, en fonction du résultat de la vérification précitée.

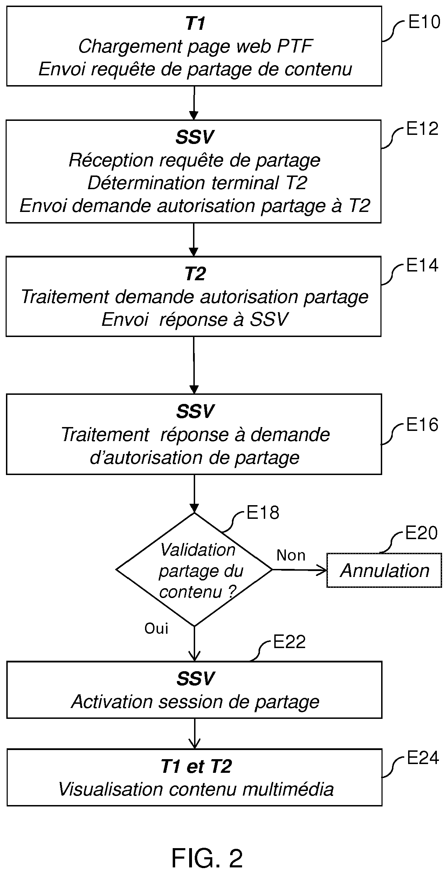

La **figure 2** représente sous forme d'organigramme les principales étapes du procédé de partage d'un contenu multimédia entre un premier et un second terminal de télécommunications, selon l'invention.

Comme représenté sur la figure 2, le procédé selon l'invention commence par l'étape E10 au cours de laquelle le terminal T1 connecté au réseau Internet, a chargé une page web d'accès au serveur de partage de documents (SSV) de la plateforme de services, par exemple une adresse du type « *cloudphone.orange.fr* ». L'utilisateur du terminal T1 connaît au moins un identifiant de communication permettant d'identifier le propriétaire du contenu qu'il désire consulter, par exemple un album photos. Cet identifiant de communication peut être une adresse email, un numéro de téléphone fixe, un numéro de téléphone mobile ou bien un nom de personne.

L'utilisateur du terminal T1 saisit cet identifiant dans un champ dédié de la page web affichée sur l'écran du terminal. Supposons que cet identifiant soit une adresse email, une requête de partage de contenu est alors générée, celle-ci inclut l'information d'identification constituée de l'adresse email du propriétaire des données. La requête de partage est alors envoyée au serveur de partage SSV.

A l'étape E12 qui suit, le serveur de partage reçoit la requête de partage en provenance du terminal T1, extrait l'information d'identification d'une personne, dans cet exemple une adresse email, et consulte la base de données d'utilisateurs DB avec comme paramètre d'entrée cette adresse email, pour obtenir au moins une information permettant de joindre l'utilisateur propriétaire du contenu objet de la requête, par exemple un identifiant d'abonné à un réseau de communications. Dans cet exemple, le serveur de partage SSV obtient un numéro de téléphone mobile. Le serveur SSV transmet alors au terminal mobile T2 qui correspond au numéro de téléphone mobile obtenu, une demande d'autorisation de partage représentative de la requête de partage du premier terminal T1 relative à un contenu personnel de la personne identifiée par le numéro de téléphone précité, à partir de la base de données d'utilisateurs DB de la plateforme de services PTF. Dans le mode de réalisation décrit, la demande d'autorisation de partage inclut un identifiant de session de partage généré dans le serveur de partage, associé à une information relative à l'identité de l'utilisateur du terminal T1.

A l'étape suivante, E14, dans le terminal mobile T2, la demande d'autorisation de partage est reçue par l'application APP2 et notifiée à l'utilisateur du terminal, par exemple par une sonnerie spécifique. Selon des variantes de réalisation, la notification au terminal T2 de la demande d'autorisation de partage peut être effectuée par l'envoi d'un message de type SMS ou MMS, ou bien par un appel téléphonique déclenché automatiquement par un serveur vocal interactif commandé par le serveur de partage. Une fois la demande d'autorisation de partage notifiée à l'utilisateur du second terminal, celui-ci peut alors déclencher, via l'interface graphique affichée par l'application APP2 du terminal T2, l'envoi d'une réponse à la demande d'autorisation de partage, à destination du serveur de partage SSV.

Comme exposé plus haut dans la description, selon un mode de réalisation avantageux de l'invention, le propriétaire des données à partager et utilisateur du terminal T2 a la possibilité de prédéfinir une liste de terminaux T1 - stockée dans le terminal T2 ou accessible sur le réseau par l'application APP2 du terminal T2 -, pour lesquels une réponse favorable à la requête de partage reçue est automatiquement envoyée par le second terminal à destination du serveur de partage. Selon une variante de réalisation qui peut être combinée avec la précédente, une telle liste prédéfinie de terminaux peut être stockée dans le serveur de partage, dans ce cas l'étape de transmission au terminal T2 d'une demande d'autorisation de partage n'est pas mise en oeuvre pour les terminaux identifiés dans la liste précitée.

Dans le second mode de réalisation présenté plus haut dans la description, dans le terminal T1, la page web d'accès au serveur de partage de la plateforme de services provoque l'affichage d'un code à deux dimensions généré automatiquement par le serveur de partage lors du téléchargement de la page web. L'étape E12 de la figure 2 est par conséquent « court-circuitée » puisque le code à deux dimensions est transmis directement du premier terminal T1 au second terminal T2, par exemple par photographie du code par le terminal T2. Dans ce cas, la réponse à la demande d'autorisation de partage, générée par le terminal T2, à l'étape E14, inclut le code photographié.

A l'étape E16, lorsque le serveur de partage SSV reçoit une réponse à la demande d'autorisation de partage en provenance du terminal T2, il analyse la réponse et valide ou non la requête de partage du contenu considéré émise par le premier terminal, en fonction du contenu de la réponse. Si la réponse reçue du terminal T2 est négative (E18, Non), la session de partage est annulée et le serveur de partage SSV transmet au terminal T1 une information de refus de session de partage (étape E20).

Si la réponse reçue du terminal T2 est positive (E18, Oui), à l'étape E22, le serveur de partage active la session de partage et le terminal T2 est informé de l'activation de la session. A cette fin, le serveur de partage ouvre un espace mémoire de partage destiné à recevoir des données permettant la visualisation dans le terminal T1 d'un contenu ou document multimédia choisi par l'utilisateur du terminal T2 ou demandé par l'utilisateur du terminal T1, au cours de la session de partage ouverte. De plus, suite à l'ouverture de l'espace de partage précité, le serveur de partage provoque l'affichage d'une fenêtre de partage dans chacun des terminaux T1 et T2 - par l'intermédiaire de l'application APP2 dans le terminal T2, et, dans le terminal T1, par l'intermédiaire du navigateur web du terminal T1.

Une fois une fenêtre de partage respectivement ouverte dans chacun des terminaux T1 et T2, l'utilisateur du terminal T2, au moyen d'une commande prédéfinie de l'interface utilisateur fournie par l'application APP2, fait passer le terminal T2 dans un mode de contrôle de la session de partage. Dans ce mode de contrôle de la session de partage, l'utilisateur du terminal T2, a la possibilité à tout moment d'interrompre une session de partage en cours, ou bien de paramétrer la durée de la session. L'utilisateur du terminal T1, via l'application APP2, peut aussi donner des droits particuliers sur un contenu à un participant à une session tel que l'utilisateur du terminal T2, par exemple des droits de lecture, d'écriture etc.

Parallèlement à la session de partage en cours, les utilisateurs T1 et T2 peuvent être en communication, via un autre canal de communication, par exemple une communication téléphonique, ou une communication par messagerie instantanée, et par ce biais se mettre d'accord sur le contenu à partager.

A l'étape E24, au cours de la session de partage l'utilisateur du terminal T2 peut alors déterminer un contenu multimédia à partager ou à présenter, par exemple un album photo. Dans ce but l'utilisateur du terminal T2 peut alors sélectionner un élément particulier du contenu multimédia destiné à être présenté, par exemple une photo, à l'aide de l'interface graphique utilisateur de l'application APP2. Pour chaque élément sélectionné l'application APP2 transmet une commande à l'application APP-A du serveur de partage, cette commande créant dans l'espace mémoire de partage un lien de type URL pointant sur l'emplacement mémoire réel correspondant à l'élément en question. En pratique, selon un exemple de réalisation, ce lien URL est à usage unique, c'est-à-dire qu'il sera détruit une fois l'élément transmis au terminal T1.

Le lien vers le contenu à visualiser est alors transmis par l'application APP-A du serveur SSV, au client web (navigateur web) du terminal T1. Dans le mode de réalisation exposé, toute mise à jour apportée aux données contenues dans l'espace mémoire de partage, dans le serveur SSV, est immédiatement répercutée vers le client web du terminal T1. En pratique, la transmission est effectuée selon le mode de communication *Push* du protocole HTTP, et la recherche de mise à jour automatique par une technique de type *long polling,* mise en oeuvre par le client web du terminal T1.

Dès réception d'un lien URL (ou lien hypertexte, plus généralement) vers un élément à partager, le navigateur web du terminal T1 télécharge l'élément correspondant stocké dans le serveur de données SVR.

De manière générale, dans les modes de réalisation exposés ici, les échanges entre les terminaux T1 et T2 et le serveur de partage SSV sont mis en oeuvre par des commandes utilisant le langage connu XML (*Extensible Markup Language*) et transmises selon le protocole de communication connu HTTP (*HyperText Transfer Protocol*).

Grâce à l'invention, l'utilisateur d'un terminal de télécommunication T1 de type standard (PC, *smartphone,* tablette numérique, TV connectée, etc.), sans être inscrit au service de stockage et de partage de données fourni par la plateforme de services PTF, et sans installation préalable d'une application spécifique dans son terminal, pourra accéder et partager des données avec un utilisateur inscrit aux services de la plateforme, qui pourra via son terminal (T2) connecté au réseau, contrôler à distance une session de partage de données dans un système de type *cloud computing.*

## Revendications

1. Procédé de partage d'un contenu multimédia entre au moins un premier utilisateur et un second utilisateur utilisant respectivement un premier (T1) et un second (T2) terminal de télécommunication, le contenu multimédia étant associé au second utilisateur et étant stocké dans une base de données (SVR) hébergée par une plateforme de services (PTF) accessible via un réseau de télécommunications, ladite plateforme de service comprenant un serveur de partage (SSV) de contenus sur ledit réseau, **caractérisé en ce qu'**il comprend des étapes de :
A - validation (E12-E18) d'une requête de partage du contenu multimédia émise par le premier terminal (T1) comprenant :
- génération (E10), par le premier terminal (T1), d'une requête de partage dudit contenu multimédia, ladite requête incluant une information d'identification du second utilisateur, et envoi de la requête de partage au serveur de partage (SSV) ;
- détermination (E12), par le serveur de partage (SSV), du second terminal (T2) à partir de ladite information d'identification du second utilisateur extraite de la requête de partage reçue, puis transmission (E12) d'une demande d'autorisation de partage concernant le premier terminal relativement audit contenu multimédia ;
- réception, par le deuxième terminal (T2), de la demande d'autorisation et envoi (E14) d'une réponse à ladite demande d'autorisation de partage à destination du serveur de partage (SSV) de ladite plateforme, ladite réponse comprenant un identifiant du deuxième terminal (T2) ; et
- validation (E18), par le serveur de partage (SSV), de la requête de partage émise par le premier terminal (T1) à partir de l'identifiant du deuxième terminal (T2) contenu dans ladite réponse ;
B - dans le serveur de partage (SSV) de contenus, si la requête de partage est validée, activation (E22) d'une session de partage et ouverture d'un espace mémoire de partage destiné à permettre le partage de données de contenu entre le premier et le second terminal, et transmission au premier terminal (T1) d'une information d'activation de la session ;
C - affichage (E24) dans chacun des premier et second terminaux (T1, T2) d'une fenêtre de partage destinée à la visualisation de données contenues dans l'espace de partage au cours de la session de partage ; et
D - transmission (E24) du second terminal (T2) vers le serveur de partage (SSV) d'au moins une commande destinée à permettre la visualisation dans le premier terminal (T1), via ladite fenêtre de partage, d'au moins un contenu multimédia à partager déterminé par le second utilisateur.

2. Procédé selon la revendication 1 dans lequel, lors de l'étape A, le serveur de partage (SSV) transmet (E12) la demande d'autorisation de partage au second terminal (T2).

3. Procédé selon la revendication 2, dans lequel l'étape a3 comprend la notification de la demande d'autorisation de partage dans le second terminal ; et suite à une action du second utilisateur effectuée au moyen d'une interface homme-machine du second terminal, l'envoi d'une réponse à la demande d'autorisation de partage à destination du serveur de partage.

4. Procédé selon la revendication 1, dans lequel, lors de l'étape A :
- téléchargement et affichage dans le premier terminal d'une page web d'accès au serveur de partage de ladite plateforme, ladite page web représentant un code à deux dimensions généré automatiquement par le serveur de partage lors du téléchargement de ladite page web ;
- transmission, par le premier terminal (T1) au deuxième terminal (T2), d'une information représentative d'une demande d'autorisation de partage émise par le serveur de partage (SSV) de contenus, ladite information consistant à transmettre ledit code à deux dimensions à une application logicielle installée dans le second terminal,
dans lequel ladite réponse envoyée par le deuxième terminal à destination du serveur de partage (SSV) inclut le code à deux dimensions.

5. Procédé selon l'une quelconque des revendications 1 à 4, comprenant l'affichage dans le second terminal d'une interface utilisateur présentant à l'utilisateur du second terminal, des informations relatives aux demandes de partage et à l'état de sessions de partage actives avec la plateforme de services pour un ensemble de terminaux de télécommunications prédéterminé, ladite interface utilisateur offrant des fonctions de contrôle d'une session de partage en cours, relatives en particulier à la durée de la session ou à l'arrêt de la session.

6. Procédé selon l'une quelconque des revendications 1 à 5, dans lequel à l'étape D ladite commande destinée à permettre la visualisation d'un contenu multimédia déterminé est une commande utilisant un langage de type XML transmise selon un protocole de type HTTP, le traitement de ladite commande par le serveur de partage de contenus déclenchant la création dans l'espace de partage d'un lien de type URL permettant l'accès au contenu multimédia depuis le premier terminal.

7. Procédé selon l'une quelconque des revendications 1 à 6, dans lequel le second terminal est un terminal de téléphonie mobile et ledit identifiant du second terminal est un identifiant d'abonné à un réseau de téléphonie mobile.

8. Système comprenant au moins un premier terminal (T1) de télécommunication d'un premier utilisateur, au moins un deuxième terminal (T2) de télécommunication d'un deuxième utilisateur et un serveur de partage (SSV) de contenus multimédias pour la mise en œuvre d'un procédé de partage de contenus, conforme à l'une quelconque des revendications 1 à 7, ledit serveur de partage comprenant :
- des moyens (I/O-A) de réception, en provenance du second terminal de télécommunication (T2), d'une réponse à une requête de partage d'un contenu multimédia émise par le premier terminal de télécommunication (T1), dans lequel lesdits moyens (I/O-A) de réception sont adaptés à recevoir une requête de partage de contenu en provenance du premier terminal, ladite requête incluant une information d'identification d'un second utilisateur ;
- des moyens de détermination du second terminal (T2) à partir de ladite information d'identification d'un second utilisateur extraite de la requête de partage de contenu reçue ;
- des moyens de transmission d'une demande d'autorisation de partage concernant le premier terminal relativement audit contenu multimédia ;
- des moyens (APP-A) de vérification d'un identifiant du second terminal suite à la réception de ladite réponse à une requête de partage de contenu, ladite réponse comprenant ledit identifiant du deuxième terminal (T2) ;
- des moyens (APP-A) d'activation d'une session de partage de contenu entre le premier et le second terminal en fonction du résultat de la vérification de l'identifiant du second terminal ; et
- chacun des premier et second terminaux (T1, T2) étant configuré pour afficher une fenêtre de partage destinée à la visualisation de données contenues dans l'espace de partage au cours de la sessions de partage ;- le deuxième terminal (T2) comprenant des moyens de transmission vers le serveur de partage (SSV) d'au moins une commande destinée à permettre la visualisation dans le premier terminal (T1), via ladite fenêtre de partage, d'au moins un contenu multimédia à partager déterminé par le second utilisateur.

9. Système selon la revendication 8, dans lequel les moyens de transmission du serveur de partage (SSV) sont configurés pour transmettre au second terminal (T2) la demande d'autorisation de partage concernant le premier terminal relativement audit contenu multimédia.

10. Système selon la revendication 8 ou 9, dans lequel lesdits moyens d'activation de session de partage incluent des moyens de création d'un espace mémoire de partage destiné à permettre le partage temporaire de données de contenu entre les premier et second terminaux.

11. Module logiciel comportant des instructions de programme dont l'exécution par un processeur informatique permet de mettre en œuvre les étapes correspondantes d'un procédé de partage d'un contenu multimédia, selon l'une quelconque des revendications 1 à 7.

## Patentansprüche

1. Verfahren zum Teilen von Multimediainhalt zwischen wenigstens einem ersten Anwender und einem zweiten Anwender, die ein erstes (T1) bzw. ein zweites (T2) Telekommunikationsendgerät nutzen, wobei der Multimediainhalt dem zweiten Anwender zugeordnet ist und in einer Datenbank (SVR)gespeichert ist, die von einer Dienstplattform (PTF) gehostet wird, auf die über ein Telekommunikationsnetz zugegriffen werden kann, wobei die Dienstplattform einen Server (SSV) zum Teilen von Inhalten in dem Netz enthält, **dadurch gekennzeichnet, dass** es die folgenden Schritte umfasst:
A - Validieren (E12-E18) einer Anforderung zum Teilen des Multimediainhalts, die von dem ersten Endgerät (T1) ausgegeben wird, umfassend:
- Erzeugen (E10) einer Anforderung zum Teilen des Multimediainhalts durch das erste Endgerät (T1), wobei die Anforderung Informationen für die Identifizierung des zweiten Anwenders enthält, und Schicken der Teilungsanforderung zu dem Teilungs-Server (SSV);
- Bestimmen (E12) des zweiten Endgeräts (T2) durch den Teilungs-Server (SSV) anhand der Informationen für die Identifizierung des zweiten Anwenders, die aus der empfangenen Teilungsanforderung extrahiert werden, anschließend Senden (E12) einer das erste Endgerät betreffenden Aufforderung zur Zulassung des Teilens des Multimediainhalts;
- Empfangen der Zulassungsaufforderung durch das zweite Endgerät (T2) und Schicken (E14) einer Antwort auf die Teilungszulassungsaufforderung an den Teilungs-Server (SSV) der Plattform, wobei die Antwort eine Kennung des zweiten Endgeräts (T2) enthält; und
- Validieren (E18) der Teilungsanforderung, die von dem ersten Endgerät (T1) gesendet wird, durch den Teilungs-Server (SSV) anhand der Kennung des zweiten Endgeräts (T2), die in der Antwort enthalten ist;
B - in dem Server (SSV) zum Teilen von Inhalten, falls die Teilungsanforderung validiert wird, Aktivieren (E22) einer Teilungssitzung und Öffnen eines Teilungsspeicherraums, der dazu bestimmt ist, das Teilen von Inhaltsdaten zwischen dem ersten und dem zweiten Endgerät zu ermöglichen, und Senden von Informationen über die Aktivierung der Sitzung zu dem ersten Endgerät (T1);
C - Anzeigen (E24) in dem ersten und in dem zweiten Endgerät (T1, T2) eines Teilungsfensters, das dazu bestimmt ist, die Daten, die in dem Teilungsraum enthalten sind, während der Teilungssitzung zu visualisieren; und
D - Senden (E24) von dem zweiten Endgerät (T2) zu dem Teilungs-Server (SSV) wenigstens eines Befehls, der dazu dient, die Visualisierung wenigstens eines durch den zweiten Anwender bestimmten zu teilenden Multimediainhalts in dem ersten Endgerät (T1) mittels des Teilungsfensters zu ermöglichen.

2. Verfahren nach Anspruch 1, wobei im Schritt A der Teilungs-Server (SSV) die Teilungszulassungsaufforderung zu dem zweiten Endgerät (T2) sendet (E12).

3. Verfahren nach Anspruch 2, wobei der Schritt a3 das Melden der Teilungszulassungsaufforderung in dem zweiten Endgerät; und nach einem Eingriff des zweiten Anwenders, der mittels einer Mensch/Maschine-Schnittstelle des zweiten Endgeräts ausgeführt wird, das Schicken einer Antwort auf die Teilungszulassungsanforderung zu dem Teilungs-Server umfasst.

4. Verfahren nach Anspruch 1, wobei der Schritt A Folgendes umfasst:
- Fernladen und Anzeigen in dem ersten Endgerät einer Web-Seite für den Zugriff auf den Teilungs-Server der Plattform, wobei die Web-Seite einen zweidimensionalen Code darstellt, der durch den Teilungs-Server während des Fernladens der Web-Seite automatisch erzeugt wird;
- Senden von Informationen, die eine Teilungszulassungsaufforderung darstellen, die von dem Server (SSV) zum Teilen von Inhalten ausgesendet wird, von dem ersten Endgerät (T1) zu dem zweiten Endgerät (T2), wobei die Informationen darin bestehen, den zweidimensionalen Code zu einer in dem zweiten Endgerät installierten Software-Anwendung zu senden,
wobei die von dem zweiten Endgerät zu dem Teilungs-Server (SSV) geschickte Antwort den zweidimensionalen Code enthält.

5. Verfahren nach einem der Ansprüche 1 bis 4, das das Anzeigen in dem zweiten Endgerät einer Anwenderschnittstelle umfasst, die für den Anwender des zweiten Endgeräts Informationen bezüglich der Teilungsaufforderungen und den Zustand aktiver Teilungssitzungen mit der Dienstplattform für eine Gesamtheit vorgegebener Telekommunikationsendgeräte darstellt, wobei die Anwenderschnittstelle Funktionen zum Steuern der laufenden Teilungssitzung, die insbesondere auf die Dauer der Sitzung oder das Beenden der Sitzung bezogen sind, anbietet.

6. Verfahren nach einem der Ansprüche 1 bis 5, wobei im Schritt D der Befehl, der dazu dient, die Visualisierung eines bestimmten Multimediainhalts zu ermöglichen, ein Befehl ist, der eine Sprache des Typs XML verwendet, die gemäß einem Protokoll des Typs HTTP übertragen wird, wobei die Verarbeitung des Befehls durch den Server zum Teilen von Inhalten die Erzeugung eines Links des Typs URL, der den Zugriff auf den Multimediainhalt von dem ersten Endgerät aus ermöglicht, in dem Teilungsraum auslöst.

7. Verfahren nach einem der Ansprüche 1 bis 6, wobei das zweite Endgerät ein Mobiltelefonendgerät ist und die Kennung des zweiten Endgeräts eine Teilnehmerkennung in einem Mobiltelefonnetz ist.

8. System, das wenigstens ein erstes Telekommunikationsendgerät (T1) eines ersten Anwenders, wenigstens ein zweites Telekommunikationsendgerät (T2) eines zweiten Anwenders und einen Server (SSV) zum Teilen von Multimediainhalten für die Ausführung eines Verfahrens zum Teilen von Inhalten nach einem der Ansprüche 1 bis 7 umfasst, wobei der Teilungs-Server Folgendes umfasst:
- Mittel (I/O-A) zum Empfangen einer Antwort auf eine Anforderung zum Teilen von Multimediainhalt, die von dem ersten Telekommunikationsendgerät (T1) ausgesendet wird, von dem zweiten Telekommunikationsendgerät (T2), wobei die Empfangsmittel (I/O-A) dafür ausgelegt sind, eine Anforderung zum Teilen von Inhalt von dem ersten Endgerät zu empfangen, wobei die Anforderung Informationen für die Identifizierung eines zweiten Anwenders enthält;
- Mittel zum Bestimmen des zweiten Endgeräts (T2) anhand der Informationen für die Identifizierung eines zweiten Anwenders, die aus der empfangenen Anforderung zum Teilen von Inhalt extrahiert werden;
- Mittel zum Senden einer das erste Endgerät betreffenden Aufforderung zum Zulassen des Teilens des Multimediainhalts;
- Mittel (APP-A) zum Verifizieren einer Kennung des zweiten Endgeräts nach dem Empfangen der Antwort auf eine Inhaltsteilungsanforderung, wobei die Antwort die Kennung des zweiten Endgeräts (T2) enthält; und
- Mittel (APP-A) zum Aktivieren einer Sitzung zum Teilen von Inhalt zwischen dem ersten und dem zweiten Endgerät als Funktion des Ergebnisses der Verifikation der Kennung des zweiten Endgeräts;
- wobei das erste und das zweite Endgerät (T1, T2) konfiguriert sind, ein Teilungsfenster anzuzeigen, das dazu bestimmt ist, Daten, die in dem Teilungsraum enthalten sind, während der Teilungssitzung zu visualisieren; wobei das zweite Endgerät (T2) Mittel zum Senden wenigstens eines Befehls zu dem Teilungs-Server (SSV) umfasst, wobei der Befehl dazu dient, die Visualisierung wenigstens eines durch den zweiten Anwender bestimmten zu teilenden Multimediainhalts in dem ersten Endgerät (T1) mittels des Teilungsfensters zu ermöglichen.

9. System nach Anspruch 8, wobei die Sendemittel des Teilungs-Server (SSV) konfiguriert sind, zu dem zweiten Endgerät (T2) die das erste Endgerät betreffende Aufforderung zum Zulassen des Teilens des Multimediainhalts zu senden.

10. System nach Anspruch 8 oder 9, wobei die Mittel zum Aktivieren der Teilungssitzung Mittel zum Erzeugen eines Teilungsspeicherraums, der dazu dient, das temporäre Teilen von Inhaltsdaten zwischen dem ersten und dem zweiten Endgerät zu ermöglichen, enthalten.

11. Software-Modul, das Programmbefehle enthält, deren Ausführung durch einen Datenverarbeitungsprozessor die Ausführung der entsprechenden Schritte eines Verfahrens zum Teilen von Multimediainhalt nach einem der Ansprüche 1 bis 7 ermöglicht.

## Claims

1. Method for sharing an item of multimedia content between at least a first user and a second user using a first (T1) and a second (T2) telecommunication terminal, respectively, the item of multimedia content being associated with the second user and being stored in a database (SVR) hosted by a services platform (PTF) that is accessible via a telecommunications network, said services platform comprising a server (SSV) for sharing content over said network, **characterized in that** it comprises steps of:
A. validating (E12-E18) a request to share the item of multimedia content, which request is transmitted by the first terminal (T1) comprising:
- generating (E10), by means of the first terminal (T1), a request to share said item of multimedia content, said request including an item of information identifying the second user, and sending the sharing request to the sharing server (SSV);
- determining (E12), by means of the sharing server (SSV), the second terminal (T2) on the basis of said item of information identifying the second user extracted from the received sharing request, then transmitting (E12) a sharing authorization request regarding the first terminal in relation to said item of multimedia content;
- receiving, by means of the second terminal (T2), the authorization request and sending (E14) a response to said sharing authorization request to the sharing server (SSV) of said platform, said response comprising an identifier of the second terminal (T2); and
- validating (E18), by means of the sharing server (SSV), the sharing request transmitted by the first terminal (T1) on the basis of the identifier of the second terminal (T2) contained in said response;
B. in the content sharing server (SSV), if the sharing request is validated, activating (E22) a sharing session and opening a sharing memory space for allowing content data to be shared between the first and the second terminal, and transmitting an item of session activation information to the first terminal (T1);
C. displaying (E24), in each of the first and second terminals (T1, T2), a sharing window for viewing data contained in the sharing space during the sharing session; and
D. transmitting (E24), from the second terminal (T2) to the sharing server (SSV), at least one command for allowing at least one item of multimedia content to be shared, determined by the second user, to be viewed on the first terminal (T1) via said sharing window.

2. Method according to Claim 1, wherein, in step A, the sharing server (SSV) transmits (E12) the sharing authorization request to the second terminal (T2).

3. Method according to Claim 2, wherein step a3 comprises the operation of notifying of the sharing authorization request on the second terminal; and, following an action by the second user performed by means of a human-machine interface of the second terminal, sending a response to the sharing authorization request to the sharing server.

4. Method according to Claim 1, wherein, in step A:
- downloading and displaying, on the first terminal, a webpage for accessing the sharing server of said platform, said webpage showing a two-dimensional code generated automatically by the sharing server when said webpage is downloaded;
- transmitting, by means of the first terminal (T1), an item of information representative of a sharing authorization request, transmitted by the content sharing server (SSV), to the second terminal (T2), said item of information consisting in transmitting said two-dimensional code to a software application installed on the second terminal,
wherein said response sent by the second terminal to the sharing server (SSV) includes the two-dimensional code.

5. Method according to one of Claims 1 to 4, comprising the operation of displaying, on the second terminal, a user interface presenting, to the user of the second terminal, information relating to the sharing requests and to the status of active sharing sessions with the services platform for a predetermined set of telecommunication terminals, said user interface providing functions for controlling a sharing session that is under way, relating in particular to the duration of the session or to ending the session.

6. Method according to any one of Claims 1 to 5, wherein, in step D, said command for allowing a determined item of multimedia content to be viewed is a command using XML transmitted according to HTTP, the processing of said command by the content sharing server triggering the creation, in the sharing memory space, of a URL link allowing the item of multimedia content to be accessed from the first terminal.

7. Method according to any one of Claims 1 to 6, wherein the second terminal is a mobile telephony terminal and said identifier of the second terminal is an identifier of a subscriber to a mobile telephony network.

8. System comprising at least a first telecommunication terminal (T1) of a first user, at least a second telecommunication terminal (T2) of a second user and a multimedia content sharing server (SSV) for implementing the content sharing service, in accordance with any one of Claims 1 to 7, said sharing server comprising:
- means (I/O-A) for receiving, from the second telecommunication terminal (T2), a response to a request to share an item of multimedia content, which request is transmitted by the first telecommunication terminal (T1), wherein said receiving means (I/O-A) are suitable for receiving a content sharing request from the first terminal, said request including an item of information identifying a second user;
- means for determining the second terminal (T2) on the basis of said item of information identifying a second user extracted from the received content sharing request;
- means for transmitting a sharing authorization request regarding the first terminal in relation to said item of multimedia content;
- means (APP-A) for verifying an identifier of the second terminal following receipt of said response to a content sharing request, said response comprising said identifier of the second terminal (T2);
- means (APP-A) for activating a session for sharing content between the first and the second terminal depending on the result of the operation of verifying the identifier of the second terminal; and
- each of the first and second terminals (T1, T2) being configured to display a sharing window for viewing data contained in the sharing space during the sharing session; - the second terminal (T2) comprising means for transmitting, to the sharing server (SSV), at least one command for allowing at least one item of multimedia content to be shared, determined by the second user, to be viewed on the first terminal (T1) via said sharing window.

9. System according to Claim 8, wherein the transmission means of the sharing server (SSV) are configured to transmit, to the second terminal (T2), the sharing authorization request regarding the first terminal in relation to said item of multimedia content.

10. System according to Claim 8 or 9, wherein said sharing session activation means include means for creating a sharing memory space for allowing content data to be shared temporarily between the first and second terminals.

11. Software module including program instructions, the execution of which by a computer processor allows the corresponding steps of a method for sharing an item of multimedia content, according to any one of Claims 1 to 7, to be implemented.
